(19) **Europäisches Patentamt**

**European Patent Office**

**Office européen des brevets**

(11) **EP 0 678 808 B1**

(12) **FASCICULE DE BREVET EUROPEEN**

(45) Date de publication et mention
de la délivrance du brevet:
**22.11.2000 Bulletin 2000/47**

(51) Int Cl.⁷: **G06F 7/544**, G06F 7/48

(21) Numéro de dépôt: **95400866.0**

(22) Date de dépôt: **18.04.1995**

(54) **Dispositif de traitement numérique avec instructions de recherche du minimum et du maximum**

Digitale Verarbeitungsanlage mit Befehlen zum Suchen des Minimums und Maximums

Digital processing device with instructions for searching the minimum and maximum

(84) Etats contractants désignés:
**DE FR GB IT**

(30) Priorité: **19.04.1994 FR 9404656**

(43) Date de publication de la demande:
**25.10.1995 Bulletin 1995/43**

(73) Titulaire: **STMicroelectronics S.A.**
**94250 Gentilly (FR)**

(72) Inventeur: **Curtet, Joel**
**F-94230 Cachan (FR)**

(74) Mandataire: **Schmit, Christian Norbert Marie et al**
**Cabinet BALLOT-SCHMIT,**
**16, avenue du Pont Royal**
**94230 Cachan (FR)**

(56) Documents cités:
**EP-A- 0 181 516      EP-A- 0 292 854**
**US-A- 4 967 349**

- **IBM TECHNICAL DISCLOSURE BULLETIN, vol. 29, no. 5, Octobre 1986 NEW YORK US, pages 1975-1978, 'ALU IMPLEMENTING NATIVE MINIMUM/MAXIMUM FUNCTION FOR SIGNAL PROCESSING APPLICATIONS'**
- **K. HWANG 'COMPUTER ARITHMETIC, PRINCIPLES, ARCHITECTURE AND DESIGN' 1979 , JOHN WILEY & SONS , NEW YORK pages 70-75 \* figure 3.1 \***
- **R. ZAKS: "Programmation du 6800", 1980, SYBEX, PARIS**

**Description**

L'invention concerne un dispositif de traitement numérique avec des instructions dédiées à la détermination d'un minimum ou d'un maximum. Elle s'applique aux processeurs de traitement du signal.

Dans certaines applications spécialisées (par exemple en téléphonie numérique GSM), il est nécessaire de déterminer le minimum ou le maximum dans un flot d'opérandes. Le temps nécessaire à l'exécution de cette recherche d'un minimum ou d'un maximum peut poser un problème, pour tous ces traitements dits en temps réel, pour lesquels le temps de traitement d'un flot de données doit être inférieur au temps de renouvellement du flot de données.

Les processeurs de traitement de signal connus et plus ou moins spécialisés comportent tous une unité arithmétique et logique pour effectuer des opérations sur un ou deux opérandes et au moins un registre d'accumulation qui sert à mémoriser le résultat de la dernière opération calculée par l'unité arithmétique et logique, pour fournir notamment cet opérande à l'unité arithmétique et logique pour l'opération suivante. Les opérandes peuvent être fournis par plusieurs sources, dont généralement un registre gauche et un registre droit associés à l'unité arithmétique et logique, et le registre d'accumulation, comme on vient de le dire. Des informations sur l'opération en cours sont fournies par l'unité arithmétique et logique. Le transfert du résultat dans le registre d'accumulation se fait en général via un circuit de saturation logique, qui permet d'éviter les dépassements de capacité et donc de réduire les risques d'auto-oscillations, en limitant le résultat vers les plus forts poids.

Avec une telle architecture, le calcul du minimum ou du maximum entre deux opérandes nécessite l'utilisation de plusieurs instructions classiques, à savoir une comparaison, l'unité arithmétique et logique effectuant pour cette comparaison une soustraction entre les deux opérandes et des instructions conditionnelles sur les différents bits d'information délivrés par l'unité arithmétique et logique pendant ce calcul, comme par exemple le bit de signe et différents bits de report, pour déterminer l'opérande le plus grand ou le plus petit et le transférer dans le registre d'accumulation. Selon le nombre de conditions à prendre en compte (en fonction de la représentation numérique utilisée pour les opérandes), ce sont au moins deux ou trois cycles instructions par paire d'opérandes qui sont nécessaires. Si l'on ne dispose que d'un temps de traitement très court pour déterminer le minimum ou le maximum dans un flot de données, ces deux ou trois cycles instruction par paire d'opérandes sont loin d'être négligeables.

Le document US-A-4967349 concerne un processeur de traitement de signal capable de déterminer les valeurs MIN et MAX. Ce processeur effectue une comparaison entre le contenu de l'accumulateur ACC et un opérande DM présenté en entrée. Cette comparaison ne modifie pas le contenu de l'accumulateur. Ensuite, une opération conditionnelle charge l'accumulateur avec l'opérande DM si le bit de signe issu de la comparaison est égal à O. Si ce bit de signe vaut 0, le contenu de l'accumulateur reste inchangé. L'opération de recherche de min ou de max s'effectue en deux cycles instructions. Dans le premier cycle, on a une comparaison classique avec un positionnement des bits du registre de condition. Dans le deuxième cycle, on a un chargement conditionnel de l'accumulateur.

Le document IBM TECHNICAL DISCLOSURE BULLETIN, vol. 29, no. 5, Octobre 1986 NEW YORK US, pages 1975-1978, 'ALU IMPLEMENTING NATIVE MINIMUM/MAXIMUM FUNCTION FOR SIGNAL PROCESSING APPLICATIONS' concerne une instruction « MIN/MAX magnitude » exécutable en un cycle instruction. Les opérandes A et B sont appliqués en entrée de l'ALU. Cette ALU effectue la même opération A-B pour la recherche du MIN et du MAX. Le mode de sélection entre A et B change selon le signe AO, BO des opérandes.

Un objet de l'invention est de proposer un dispositif de traitement numérique capable de traiter ce calcul de minimum ou de maximum d'une paire d'opérandes en un seul cycle instruction.

Un autre objet de l'invention est de modifier la structure du dispositif de traitement numérique sans trop affecter la valeur de la durée d'un cycle instruction : on veut pouvoir calculer en un seul cycle instruction le minimum ou le maximum entre deux opérandes, avec un cycle d'instruction aussi court que possible.

L'invention propose notamment d'utiliser un circuit conditionnel pour déterminer le plus grand ou le plus petit opérande et pour commander le transfert de ce plus grand ou ce plus petit opérande dans un registre d'accumulation.

L'invention concerne un dispositif de traitement numérique tel que défini dans la revendication 1.

D'autres modes de réalisation de l'invention sont spécifiés dans les revendications dependantes attenantes.

D'autres caractéristiques et avantages de l'invention sont présentés dans la description qui suit, faite à titre indicatif et non limitatif de l'invention et en référence aux dessins annexés dans lesquels :

- la figure 1 représente un dispositif de traitement numérique selon l'invention;
- la figure 2 représente un exemple numérique d'élaboration de la condition selon l'invention.

Un dispositif de traitement numérique comporte une unité de commande UC qui assure l'enchaînement des opérations et gère le fonctionnement des autres éléments du dispositif. Sa complexité dépend de l'architecture du dispositif et des fonctions arithmétiques et logiques envisagées.

Le dispositif de traitement numérique comporte classiquement comme autres éléments, une unité arithmétique et logique ALU, un registre d'accumulation A et des registres sources R1, R2 et un circuit logique de saturation SAT.

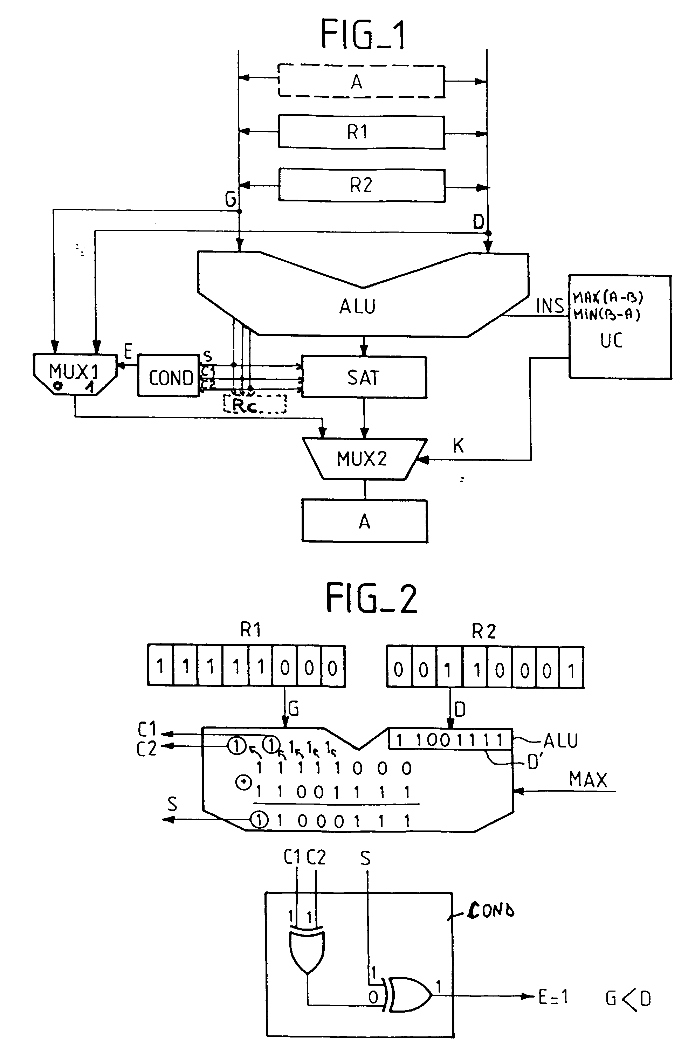

L'unité arithmétique et logique ALU peut effectuer diverses opérations comme des additions, soustractions, décalages logiques ou arithmétiques, ET logiques, OU logiques, comparaisons, incrémentations etc., selon sa complexité. Elle opère sur un ou deux opérandes qui lui sont fournis sur une entrée gauche G ou une entrée droite D. Ces opérandes peuvent être par exemple fournis par des registres sources R1 ou R2, ou encore par le registre d'accumulation A. Elle fournit le résultat de l'opération effectuée sur une sortie OUT. Ce résultat est éventuellement transféré dans le registre d'accumulation A. Elle délivre aussi des bits d'information sur l'opération effectuée. En général, ces bits d'information sont mémorisés dans un registre de conditions Rc, représenté en pointillé sur la figure 1.

L'unité arithmétique est contrôlée par l'unité de commande UC, qui lui envoie un code instruction INS correspondant à l'opération arithmétique et logique à effectuer. Elle peut aussi être contrôlée par un registre d'état (non représenté), contenant par exemple le format des opérandes pour l'opération courante, quand l'unité arithmétique et logique est prévue pour pouvoir travailler sur plusieurs formats : opérandes signés, non signés, format entier ou fractionnel, sur 8 ou 16 bits ...

Le circuit de saturation logique SAT est placé entre la sortie OUT de l'unité arithmétique et logique et le registre d'accumulation A, et reçoit différents bits d'information de l'unité arithmétique et logique. Ces bits d'information sont : les deux bits de report de plus fort poids et le bit de signe du résultat. Leur décodage permet en cas de dépassement de capacité, de saturer le résultat soit à la limite inférieure, soit à la limite supérieure de la représentation. Pour une représentation sur 16 bits en entier signé, il sature ainsi soit à la valeur -2$^{15}$ soit à la valeur +2$^{15}$-1.

Les fonctions les plus courantes du traitement numérique utilisent ces différents circuits bien connus de l'homme du métier, qui ne seront pas détaillés plus avant.

Selon l'invention, le dispositif de traitement numérique comporte un circuit conditionnel (COND) pour déterminer lequel des deux opérandes appliqués en entrées de l'unité arithmétique et logique est l'opérande le plus petit ou le plus grand. Il délivre en sortie une commande conditionnelle appliquée à un circuit pour transférer l'opérande ainsi déterminé dans le registre d'accumulation A.

Le circuit pour transférer comprend un premier multiplexeur MUX1 et un deuxième multiplexeur MUX2.

Le premier multiplexeur MUX1 reçoit en entrées l'entrée gauche G et l'entrée droite D de l'unité arithmétique et logique. Sa sortie est connectée sur une entrée du deuxième multiplexeur MUX2 dont une deuxième entrée est fournie par la sortie du circuit de saturation logique SAT. La sortie du deuxième multiplexeur est connectée sur l'entrée du registre d'accumulation A.

Le deuxième multiplexeur MUX2 est commandé par l'unité de commande UC pour commuter soit la sortie du premier multiplexeur MUX1, soit la sortie de l'unité arithmétique et logique ou le cas échéant celle du circuit de saturation logique SAT, selon l'instruction INS envoyée à l'unité arithmétique et logique. Notamment, sur l'instruction MIN de déterminer le plus petit opérande ou sur l'instruction MAX de déterminer le plus grand opérande, l'unité de commande UC envoie une commande K sur le deuxième multiplexeur MUX2, pour commuter la sortie du premier multiplexeur MUX1 sur le registre d'accumulation A.

Le premier multiplexeur MUX1 est lui commandé par une commande conditionnelle E élaborée par le circuit conditionnel COND. Selon la valeur binaire 0 ou 1 de la commande conditionnelle, le multiplexeur MUX1 commute en sortie l'opérande présent sur l'entrée gauche ou l'opérande présent sur l'entrée droite D.

Le circuit conditionnel élabore la commande conditionnelle E à partir des bits d'information fournis par l'unité arithmétique et logique pendant qu'elle effectue la soustraction entre les deux opérandes.

Pour une représentation en virgule fixe signée en complément à deux, ces bits d'information sont le bit de signe S du résultat, et les deux bits de report de plus fort poids C1 et C2. Pour une représentation sur n bits où le bit de poids le plus fort (n-1) est le bit de signe et le bit de poids le moins fort égal à zéro, le premier bit de report C1 est le bit de report du bit de poids n-2 sur le bit de signe S, et le deuxième bit de report C2 est le bit de report au-delà du bit de signe S. Dans la suite on parle pour C1 du bit de report du bit de poids le plus fort "-1" sur le bit de signe. Ces différents bits d'information sont représentés sur la figure 2, dans un exemple numérique. Les bits de report permettent de déterminer le signe vrai du résultat, en cas de dépassement de capacité. De manière simplifiée, si les deux bits de report sont égaux, il n'y a pas de dépassement de capacité et le bit de signe vrai est le bit de signe du résultat. Si les bits de report sont différents, il y a dépassement de capacité et, le bit de signe vrai est l'inverse du bit de signe du résultat.

Dans l'exemple de la figure 2, les opérandes sont représentés dans un format 8 bits signé. Le bit de signe est donc le bit de poids 7, tout à gauche. Le bit de plus fort poids "-1" tel que défini ci-dessus, est le bit de poids 6, à droite du bit de signe. L'unité arithmétique effectue une soustraction entre l'opérande gauche et l'opérande droit. Pour cela, l'unité arithmétique et logique calcule d'abord le complément à deux D' de l'opérande droit, puis additionne l'opérande gauche et ce complément à deux D'. Dans cette addition, le bit de report C1 du bit de poids le plus fort "-1" sur le bit de signe est égal à 1, le bit de signe S du résultat est égal à 1 et le bit de report C2 au delà du bit de signe est égal à 1.

Le circuit conditionnel COND élabore alors la commande conditionnelle E :

$$E = (C1 \text{ XOR } C2) \text{ XOR } S$$

En l'occurrence, dans l'exemple de la figure 2, la commande conditionnelle E vaut 1 et veut dire que l'opérande le plus grand est l'opérande droit, le signe vrai du résultat étant négatif. Le multiplexeur MUX1 commute alors cet opérande droit sur sa sortie.

Selon l'invention, le sens de la soustraction effectuée dans l'unité arithmétique et logique dépend de l'opérande recherché. Si on retient la logique binaire, vue dans l'exemple de la figure 2, à savoir qu'une commande conditionnelle E égale à 1 signifie que l'opérande recherché est l'opérande droit, l'instruction MAX de recherche du plus grand correspond pour l'unité arithmétique et logique à la soustraction de l'opérande droit à l'opérande gauche (A-B), c'est à dire à l'addition entre l'opérande gauche et le complément à deux de l'opérande droit. L'instruction MIN de recherche du plus petit correspond pour l'unité arithmétique à effectuer la soustraction de l'opérande gauche à l'opérande droit (B-A), c'est à dire l'addition du complément à deux de l'opérande gauche avec l'opérande droit.

De cette manière, on a la même logique conditionnelle pour déterminer l'opérande le plus grand ou le plus petit. Le circuit conditionnel est ainsi minimisé et le temps de propagation à travers ce circuit est réduit.

En pratique, dans une recherche du minimum ou du maximum dans un flot d'opérandes, on utilisera le registre d'accumulation A à la fois comme registre source et registre destination : on initialisera le registre d'accumulation A avec un premier opérande, puis on déterminera à chaque fois le minimum ou le maximum entre l'opérande contenu dans le registre d'accumulation A et un nouvel opérande présenté par un autre registre source, par un exemple par le registre R1. Le registre d'accumulation est ainsi représenté en pointillé sur la figure 1 à côté des autre registres sources R1 et R2.

Le dispositif de l'invention est particulièrement avantageux, car, en effectuant les opérations conditionnelles et de transfert de l'opérande recherché dans le registre d'accumulation A, en parallèle sur l'unité arithmétique et logique et le circuit logique de saturation, on effectue l'opération de recherche du minimum ou du maximum en un seul cycle instruction.

De plus, Le dispositif de l'invention est particulièrement simple pour l'utilisateur, car la recherche d'un minimum ou d'un maximum est codée en une seule instruction.

Enfin, par rapport à une architecture classique avec circuit de saturation logique, le cycle instruction est seulement affecté par le temps de transfert d'un multiplexeur.

En effet, le chemin critique sans le dispositif de l'invention est donné par :

$$t_{1critique} = t_{ALU} + t_{SAT}$$

et le chemin critique avec le dispositif de l'invention est donné par :

$$t_{2critique} = t_{ALU} + t_{COND} + t_{MUX1} + t_{MUX2}$$

Or le passage dans le circuit de saturation SAT consiste en un test de dépassement (décodage du bit de signe, et des deux bits de report de plus fort poids et test du même type que celui effectué dans le circuit conditionnel COND) et dans le transfert en sortie du résultat de l'unité arithmétique et logique ou de la valeur saturée (valeur maximum ou minimum du format).
On a donc

$$t_{SAT} \approx t_{COND} + t_{MUX1}$$

On augmente donc le temps de cycle instruction du temps de transfert dans le deuxième multiplexeur, soit une augmentation de l'ordre de 3% dans une technologie CMOS. En terme de surface de circuit, l'architecture de l'invention se traduit par une augmentation de l'ordre de 2% par rapport à une architecture classique. Pour des applications utilisant ces recherches de minimum ou de maximum, tout ceci est négligeable devant le gain sur le nombre de cycles instructions nécessaires pour effectuer ces recherches et influe peu sur les coûts.

Toute modification mineure du présent dispositif reste du domaine de l'invention telle que revendiquée. En particulier, le dispositif numérique peut ne pas comporter de circuit de saturation logique, le deuxième multiplexeur recevant alors sur sa deuxième entrée, la sortie de l'unité arithmétique et logique. Le dispositif de traitement numérique peut encore comporter un circuit d'arrondi en sortie de l'unité arithmétique.

Enfin, le dispositif de traitement numérique de l'invention s'applique aux différentes représentations binaires signées ou non avec adaptation éventuelle du circuit de condition.

## Revendications

**1.** Dispositif de traitement numérique en représentation binaire signée en complément à deux sur n bits de poids allant de 0 à n-1, comportant une unité arithmétique et logique (ALU) et un registre d'accumulation (A), l'unité arithmétique et logique recevant un premier opérande et un deuxième opérande respectivement sur une première entrée (G) et une deuxième entrée (D) pour effectuer une soustraction et délivrant des bits d'information relatifs à cette opération, caractérisé en ce qu'il comprend :

des moyens (MIN, MAX) pour sélectionner le sens de la soustraction selon que l'opérande à déterminer est le plus grand ou le plus petit;

un circuit conditionnel (COND) pour déterminer l'opérande le plus grand, respectivement le plus petit, recevant en entrée les bits de d'information comprenant le bit de signe (S) du résultat, un premier bit de report (C1) du bit de poids n-2 sur ledit bit de signe et un deuxième bit de report (C2) au delà dudit bit de signe et délivrant en sortie une commande conditionnelle (E); et

des moyens de transfert recevant en entrée la commande conditionnelle pour transférer le premier ou le deuxième opérande appliqués en entrée, dans le registre d'accumulation (A).

2. Dispositif de traitement numérique selon la revendication 1, caractérisé en ce que les moyens de transfert comprennent un premier multiplexeur (MUX1) recevant en entrée le premier et le deuxième opérandes pour transférer sur sa sortie l'un ou l'autre en fonction de la commande conditionnelle qu'il reçoit, un deuxième multiplexeur (MUX2) recevant en entrées la sortie du premier multiplexeur et la sortie (OUT) de l'unité arithmétique et logique, pour transférer la sortie du premier multiplexeur (MUX1) dans le registre d'accumulation, sur instruction de l'unité de commande de calculer le minimum (MIN) ou le maximum (MAX) entre lesdits premier et deuxième opérandes.

3. Dispositif de traitement numérique selon la revendication 2, qui comporte un circuit de saturation logique (SAT) sur la sortie (OUT) de l'unité arithmétique et logique, caractérisé en ce que le deuxième multiplexeur (MUX2) reçoit sur sa deuxième entrée, la sortie du circuit de saturation logique.

4. Dispositif de traitement numérique selon la revendication 1, caractérisé en ce que le circuit conditionnel comporte une première porte OU exclusif recevant en entrées ledit premier bit de report (C1) et ledit deuxième bit de report (C2) et une deuxième porte OU exclusif recevant en entrées la sortie de la première porte et ledit bit de signe (S) et délivrant en sortie la commande conditionnelle E.

**Patentansprüche**

1. Digitale Verarbeitungsvorrichtung für die binäre Darstellung mit Vorzeichen als Zweierkomplement mit n Bit und fortlaufendem Gewicht von 0 bis n-1 mit einer Arithmetik-Logikeinheit (ALU) und einem Akkumulatorregister (A), wobei die Arithmetik-Logikeinheit einen ersten Operanden und einen zweiten Operanden jeweils über einen ersten Eingang (G) und einen zweiten Eingang (D) einliest, um eine Subtraktion durchzuführen, und entsprechende Informationsbits bezüglich dieser Operation ausgibt, dadurch gekennzeichnet, daß sie umfaßt:

Vorrichtungen (MIN, MAX) zum Auswählen der Richtung der Subtraktion, je nachdem, ob der zu bestimmende Operand der größte oder der kleinste ist, einen Bedingungsschaltkreis (COND) zum Bestimmen des größten bzw. des kleinsten Operanden, der am Eingang die Informationsbits mit dem Vorzeichenbit (S) des Ergebnisses einliest, ein erstes Übertragsbit (C1) des Bits mit dem Gewicht n-2 über dem Vorzeichenbit und ein zweites Übertragsbit (C2) außerhalb des Vorzeichenbits, der am Ausgang einen bedingten Befehl (E) ausgibt, und

Übertragungsvorrichtungen, die am Eingang den bedingten Befehl zum Übertragen des ersten oder zweiten am Eingang angelegten Operanden in das Akkumulatorregister (A) einlesen.

2. Digitale Verarbeitungsvorrichtung nach Anspruch 1, dadurch gekennzeichnet, daß die Übertragungsvorrichtungen einen ersten Multiplexer (MUX1), der am Eingang den ersten und den zweiten Operanden zum Übertragen des einen oder anderen an den Ausgang in Abhängigkeit von dem bedingten Befehl, den er empfangen hat, einliest, und einen zweiten Multiplexer (MUX2), der an Eingängen den Ausgang des ersten Multiplexers und den Ausgang (OUT) der Arithmetik-Logikeinheit einliest, um den Ausgang des ersten Multiplexers (MUX1) in das Akkumulatorregister auf Befehl der Steuereinheit zu übertragen das Minimum (MIN) oder das Maximum (MAX) des ersten und zweiten Operanden zu berechnen, umfaßt.

3. Digitale Verarbeitungsvorrichtung nach Anspruch 2, die einen logischen Sättigungsschaltkreis (SAT) am Ausgang (OUT) der Arithmetik-Logikeinheit umfaßt, dadurch gekennzeichnet, daß der zweite Multiplexer (MUX2) am zweiten Eingang den Ausgang des logischen Sättigungsschaltkreises einliest.

4. Digitale Verarbeitungsvorrichtung nach Anspruch 1, dadurch gekennzeichnet, daß der Bedingungsschaltkreis ein erstes Exklusiv-ODER-Gatter umfaßt, das an den Eingängen das erste Übertragungsbit (C1) und das zweite Übertragungsbit (C2) einliest, und ein zweites Exklusiv-ODER-Gatter, das an den Eingängen den Ausgang des ersten Gatters und das Vorzeichenbit (S) einliest und am Ausgang den bedingten Befehl E ausgibt.

## Claims

1. Device for digital processing in twos complement signed binary representation in n bits with a weight ranging from 0 to n-1, having an arithmetic logic unit (ALU) and an accumulation register (A), the arithmetic logic unit receiving a first operand and a second operand respectively at a first input (G) and a second input (D) in order to effect a subtraction and delivering information bits relating to this operation, characterised in that it comprises:

   means (MIN, MAX) for selecting the direction of the subtraction depending on whether the operand to be determined is the largest or the smallest;

   a conditional circuit (COND) for determining the largest operand or respectively the smallest, receiving as an input the information bits comprising the sign bit (S) of the result, a first bit (C1) of carry from the bit of weight n-2 to said sign bit and a second bit (C2) of carry beyond the said sign bit and delivering as an output a conditional command (E); and

   transfer means receiving the conditional command as an input in order to transfer the first or second operand applied as an input, into the accumulation register (A).

2. Digital processing device according to Claim 1, characterised in that the transfer means comprise a first multiplexer (MUX1) receiving as an input the first and second operands in order to transfer onto its output one or other as a function of the conditional command which it receives, a second multiplexer (MUX2) receiving as inputs the output of the first multiplexer and the output (OUT) of the arithmetic logic unit, in order to transfer the output of the first multiplexer (MUX1) into the accumulation register, at the instruction of the control unit to calculate the minimum (MIN) or maximum (MAX) between the said first and second operands.

3. Digital processing device according to Claim 2, which has a logic saturation circuit (SAT) at the output (OUT) of the arithmetic logic unit, characterised in that the second multiplexer (MUX2) receives, at its second input, the output of the logic saturation circuit.

4. Digital processing device according to Claim 1, characterised in that the conditional circuit has a first exclusive OR gate receiving as inputs the said first carry bit (Cl) and the said second carry bit (C2) and a second exclusive OR gate receiving as inputs the output of the first gate and the said sign bit (S) and delivering as an output the conditional command (E).

# FIG_1

# FIG_2